# FASCICULE DE BREVET EUROPEEN

(11) **EP 1 245 062 B1**
(45) Date de publication et mention de la délivrance du brevet: **26.12.2007**
(21) Numéro de dépôt: 00990838.5
(22) Date de dépôt: 28.12.2000
(51) Int. Cl.: H01S 3/00, G02B 5/18, G02B 5/32

(54) **STRUCTURE DE RESEAU PAR HOLOGRAPHIE DE VOLUME A FORTE DISPERSION**
HOLOGRAPHISCHE VOLUMEN-GITTERSTRUKTUR MIT HOHER DISPERSION
NETWORK STRUCTURE USING HIGH DISPERSION VOLUME HOLOGRAPHY

(30) Priorité: 30.12.1999 FR 9916777
(43) Date de publication de la demande: 02.10.2002
(73) Titulaire: COMMISSARIAT A L'ENERGIE ATOMIQUE, 75015 Paris (FR)
(72) Inventeur: MORBIEU, Bertrand, Thomson-CSF Propriété Intellect., 94117 Arcueil Cedex (FR); LABORIE, Jean-Jacques, Thomson-CSF Propriété Intel., 94117 Arcueil Cedex (FR)
(74) Mandataire: Audier, Philippe André
(86) Numéro de dépôt international: PCT/FR2000/003726
(87) Numéro de publication internationale: WO 2001/050554

(56) Documents cités:
- US-A- 4 834 474
- LOISEAUX B ET AL: "Phase volume holographic grating for high energy lasers" SOLID STATE LASERS FOR APPLICATION TO INERTIAL CONFINEMENT FUSION: SECOND ANNUAL INTERNATIONAL CONFERENCE, PARIS, FRANCE, 22-25 OCT. 1996, vol. 3047, pages 957-962, XP000912143 Proceedings of the SPIE - The International Society for Optical Engineering, 1997, SPIE-Int. Soc. Opt. Eng, USA ISSN: 0277-786X
- JUNE-KOO RHEE ET AL: "CHIRPED-PULSE AMPLIFICATION OF 85-FS PULSES AT 250 KHZ WITH THIRD-ORDER DISPERSION COMPENSATION BY USE OF HOLOGRAPHIC TRANSMISSION GRATINGS" OPTICS LETTERS,US,OPTICAL SOCIETY OF AMERICA, WASHINGTON, vol. 19, no. 19, 1 octobre 1994 (1994-10-01), pages 1550-1552, XP000466527 ISSN: 0146-9592
- TSUNG-YUAN YANG ET AL: "Femtosecond laser pulse compression using volume phase transmission holograms" APPLIED OPTICS, 1 JULY 1985, USA, vol. 24, no. 13, pages 2021-2023, XP002145940 ISSN: 0003-6935
- LOISEAUX B ET AL: "CHARACTERIZATION OF PERPENDICULAR CHIRPED PHASE VOLUME GRATING PAIRS FOR LASER PULSE STRETCHING" OPTICS LETTERS,US,OPTICAL SOCIETY OF AMERICA, WASHINGTON, vol. 21, no. 11, 1 juin 1996 (1996-06-01), pages 806-808, XP000594889 ISSN: 0146-9592

## Description

L'invention concerne une structure de réseau par holographie de volume à forte dispersion. Elle s'applique notamment dans des dispositifs de compression ou d'étirement d'impulsions, par exemple pour la production d'impulsions laser ultra brèves de très forte énergie. Elle s'applique également dans le domaine des télécommunications optiques, par exemple pour des dispositifs de multiplexage à division de longueur d'onde ou de filtrage réjecteur en longueur d'onde.

Dans les domaines de la physique ou de la chimie, de nombreuses analyses et de nombreux traitements nécessitent l'utilisation d'impulsions laser très brèves et de forte énergie. Il est par exemple nécessaire de produire des impulsions laser très puissantes dans le domaine de la physique des plasmas. Des impulsions de très forte puissance crête sont également utiles dans le domaine de l'usinage des matériaux, où elles permettent d'obtenir des contours plus nets et précis en réduisant l'échauffement des matériaux usinés.

À ce jour la production d'impulsions laser de très forte puissance crête (Terawatt ou Petawatt) utilise la technique CPA (Chirped Pulse Amplification). Cette technique consiste à :
- étirer une impulsion femtoseconde de basse énergie pour la rendre nanoseconde,
- amplifier son énergie,
- comprimer l'impulsion haute énergie obtenue pour la rendre femtoseconde.

On obtient ainsi une impulsion ultra brève de très forte énergie, c'est-à-dire de très forte puissance crête.

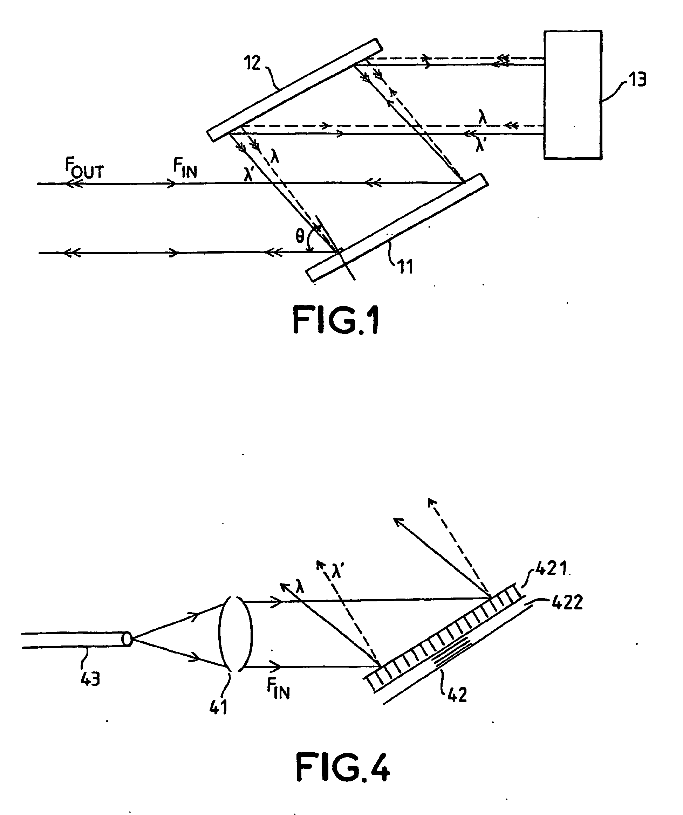

On réalise classiquement les opérations d'étirement et de compression d'impulsions à l'aide de réseaux de diffraction, selon un montage préconisé par Treacy (IEEE Journal of Quantum Electronics, vol. QE-5 n°9, sept. 1969, p. 454-458) et dont un schéma simplifié est représenté sur la figure 1. Le montage représenté sur la figure 1, par exemple un compresseur d'impulsions, comprend notamment deux réseaux de diffraction 11, 12 montés en parallèle l'un par rapport à l'autre. Le premier réseau 11 reçoit selon un angle d'incidence θ par rapport à la normale, une impulsion laser incidente F_{IN} (représenté avec une flèche simple) dont les composantes de longueurs d'onde sont variables autour d'une longueur d'onde centrale moyenne λ₀. Le faisceau diffracté est diffracté à son tour par le second réseau 12 monté en parallèle, formant ainsi un faisceau parallèle au faisceau incident. Ce faisceau est renvoyé par des moyens de renvoi 13 vers le second réseau 12 (faisceau indiqué avec une flèche double) et suit au retour un chemin identique à l'aller, formant, en sortie du premier réseau 11, le faisceau de sortie F_{OUT}. On utilise la propriété qu'ont les réseaux de diffraction de diffracter les composantes aux différentes longueurs d'onde selon un angle dépendant de la longueur d'onde. Ainsi, la figure 1 représente le chemin optique pour deux composantes aux longueurs d'onde λ (en trait pointillé) et λ' (en trait plein) avec λ' supérieure à λ. Le chemin optique, et donc le temps de parcours suivi par la composante à λ' est plus grand que celui de la composante à λ, de telle sorte que l'énergie de l'impulsion soit concentrée dans le faisceau de sortie F_{OUT} dans une durée très brève pour toutes les longueurs d'onde.

Ces réseaux de diffraction utilisés jusqu'à présent sont des réseaux gravés, c'est-à-dire des réseaux comportant en surface des traits gravés à un pas régulier. Cependant, ils ne donnent pas entière satisfaction. En effet, un inconvénient des réseaux gravés est que leur rendement, de l'ordre de 90 %, ne procure qu'une faible efficacité de compression de l'ordre de 65 %. Un autre inconvénient de ces réseaux gravés est qu'ils ont une faible tenue au flux laser. À titre d'exemple, pour une impulsion de longueur d'onde 1053 nm et d'une durée de 250 femtosecondes, les réseaux gravés en or ont une tenue au flux laser inférieure à 1 J/cm².

En conséquence, les utilisateurs dotés d'installations procurant beaucoup d'énergie ne peuvent, en pratique, bénéficier pleinement de toute la puissance qu'ils seraient en droit d'espérer d'un compresseur et/ou d'un étireur efficaces.

L'invention a notamment pour objectif de pallier ces inconvénients de l'art antérieur.

Pour cela, un objectif de l'invention est de fournir une structure de réseau par holographie de volume avec un fort pouvoir dispersif, permettant notamment sa mise en place dans un montage de type Treacy et qui présente en outre une très grande efficacité d'étirement et/ou de compression ainsi qu'une meilleure tenue au flux que les réseaux de diffraction de l'art antérieur.

Les documents suivants concernent des structures connues de réseau par holographie de volume à forte dispersion:
US-A-4 834 474;
LOISEAUX B ET AL: 'Phase volume holographic grating for high energy lasers' SOLID STATE LASERS FOR APPLICATION TO INERTIAL CONFINEMENT FUSION: SECOND ANNUAL INTERNATIONAL CONFERENCE, PARIS, FRANCE, 22-25 OCT. 1996, vol. 3047, pages 957-962, Proceedings of the SPIE - The International Society for Optical Engineering, 1997, SPIE-Int. Soc. Opt. Eng, USA;
JUNE-KOO RHEE ET AL: 'CHIRPED-PULSE AMPLIFICATION OF 85-FS PULSES AT 250 KHZ WITH THIRD-ORDER DISPERSION COMPENSATION BY USE OF HOLOGRAPHIC TRANSMISSION GRATINGS' OPTICS LETTERS,US,OPTICAL SOCIETY OF AMERICA, WASHINGTON, vol. 19, no. 19, 1 octobre 1994, pages 1550-1552;
TSUNG-YUAN YANG ET AL: 'Femtosecond laser pulse compression using volume phase transmission holograms' APPLIED OPTICS, 1 juillet 1985, USA, vol. 24, no. 13, pages 2021-2023; et
LOISEAUX B ET AL: 'CHARACTERIZATION OF PERPENDICULAR CHIRPED PHASE VOLUME GRATING PAIRS FOR LASER PULSE STRETCHING' OPTICS LETTERS,US,OPTICAL SOCIETY OF AMERICA, WASHINGTON, vol. 21, no. 11, 1 juin 1996, pages 806-808.

L'invention concerne une structure de réseau par holographie de volume à forte dispersion, caractérisée en ce qu'elle comprend un réseau holographique de volume en transmission réalisé sur un support réfléchissant, ledit réseau étant constitué de strates inclinées par rapport au plan du support, l'angle d'inclinaison des strates défini par rapport à la normale au support et le pas des strates étant choisis de telle sorte qu'un faisceau lumineux de longueur d'onde moyenne donnée, incident sur ladite structure avec un angle d'incidence donné, subisse un premier passage à travers le réseau, soit réfléchi par le support réfléchissant, subisse un second passage à travers le réseau et ne soit diffracté par le réseau que lors d'un seul desdits passages.

Outre ses applications dans le domaine de la compression et/ou étirement d'impulsion, le fort pouvoir dispersif de la structure selon l'invention permet d'autres applications, notamment dans le domaine des télécommunications optiques. En particulier, l'invention concerne un dispositif de multiplexage à division de longueurs d'onde (ou WDM, abréviation de l'expression anglo-saxonne 'wavelengths division multiplexing') et un dispositif de filtrage réjecteur en longueur d'onde mettant en oeuvre la structure de réseau selon l'invention.

D'autres caractéristiques et avantages de l'invention apparaîtront plus clairement à la lecture de la description suivante, illustrée par les figures annexées qui représentent :
- La figure 1, le schéma simplifié d'un montage dit de Treacy (déjà commentée) ;
- La figure 2, un premier mode de réalisation de la structure de réseau selon l'invention, mettant en oeuvre un réseau de transmission à strates inclinées sur un miroir diélectrique ou holographique.
- La figure 3, un second mode de réalisation de la structure de réseau selon l'invention mettant en oeuvre un réseau de transmission à strates perpendiculaires sur un miroir holographique à strates inclinées ;
- La figure 4, le schéma d'un exemple de dispositif de type WDM mettant en oeuvre la structure de réseau selon l'invention.

Sur les figures, les éléments identiques sont indexés par les mêmes repères.

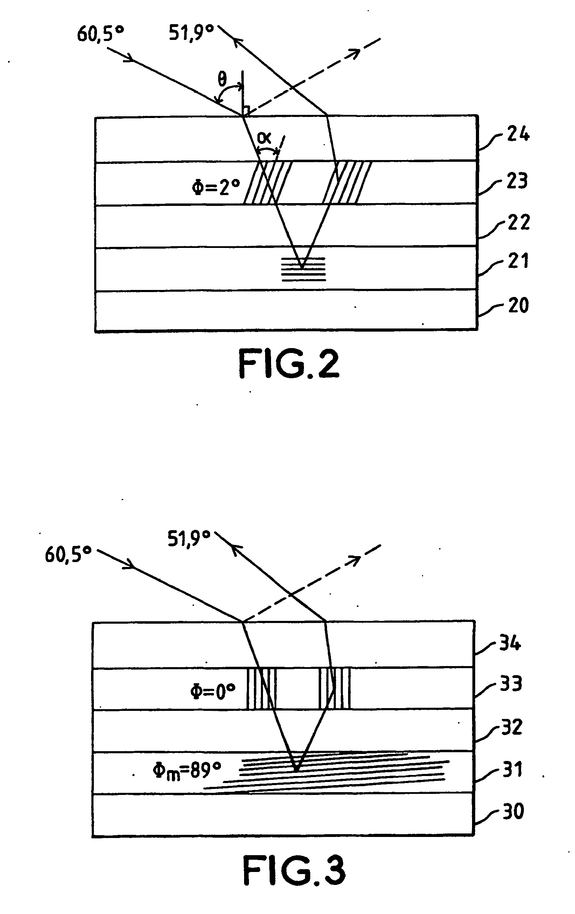

Les figures 2 et 3 représentent deux exemples de réalisation de structure de réseau par holographie de volume selon l'invention.

La structure de réseau selon l'invention comprend notamment un réseau holographique de volume en transmission réalisé sur un support réfléchissant. Le réseau en volume est formé d'une couche épaisse (quelques dizaines de microns) d'un matériau holographique dans lequel sont inscrites des strates de pas A donné, inclinées par rapport au plan du support de la couche selon un angle φ donné défini par rapport à la normale au support. L'angle d'inclinaison φ et le pas des strates A sont choisis de telle sorte qu'un faisceau lumineux de longueur d'onde centrale moyenne λ₀ donnée, incident sur ladite structure avec un angle d'incidence θ donné, subisse un premier passage à travers le réseau, soit réfléchi par le support réfléchissant, subisse un second passage à travers le réseau et ne soit diffracté par le réseau que lors d'un seul desdits passages. En pratique, l'angle d'incidence du faisceau étant donné (avantageusement proche de l'angle de Brewster pour éviter les réflexions à l'interface), on détermine le pas des strates en fonction de la longueur d'onde centrale moyenne. L'angle d'inclinaison des strates est choisi en fonction de la nature du support réfléchissant utilisé, pour introduire une dissymétrie dans la direction de propagation du faisceau par rapport à la direction des strates lors du premier et du second passage, ce qui va permettre la diffraction lors d'un seul desdits passages.

Grâce à cette structure, le faisceau diffracté émerge selon un angle proche de l'angle d'incidence θ. La structure de réseau ainsi réalisée présente donc un fort pouvoir dispersif qui lui permet notamment de l'utiliser dans un montage de type Treacy tel qu'il a été décrit précédemment. Le dispositif obtenu est alors très efficace. En effet, l'efficacité d'un réseau de volume est supérieure à 98%, ce qui permet d'atteindre une efficacité de compression sensiblement égale à 92%, soit un gain de l'ordre de 40% par rapport aux réseaux gravés. De plus, les matériaux holographiques présentent de bonnes tenues au flux laser, par exemple sensiblement de l'ordre de 2 J/cm² et 4 J/cm² pour une impulsion de longueur d'onde 1053 nm et de durée 250 femtosecondes.

Dans la structure de réseau selon l'invention, au lieu d'avoir un réseau en réflexion agissant en diffraction directe, on utilise selon l'invention un réseau de volume en transmission, qui, par exemple, laisse passer le faisceau incident sans le diffracter vers le support réfléchissant, et qui reçoit ensuite le faisceau réfléchi pour le diffracter (avec un angle de diffraction fonction de la longueur d'onde). On remplace donc la diffraction directe par une séquence « transmission sans diffraction - réflexion - transmission avec diffraction », ou « transmission avec diffraction - réflexion - transmission sans diffraction », la transmission sans diffraction et la transmission avec diffraction étant réalisées par la même couche contenant le réseau holographique de volume en transmission. Outre une meilleure résistance au flux par rapport aux réseaux gravés de l'art antérieur, cette structure présente l'avantage par exemple par rapport à des réseaux holographiques en réflexion, d'être beaucoup plus facile à réaliser sur un plan technologique. En effet, pour obtenir la même dispersion, la déposante a montré que le pas des strates dans un réseau en réflexion devrait être plus petit, et l'angle d'inclinaison des strates important (quelques dizaines de degrés), rendant l'enregistement du réseau très difficile en pratique, aux longueurs d'onde usuelles d'enregistrement dans les matériaux holographiques classiques.

Selon un premier mode de réalisation de l'invention, illustré en figure 2, le réseau de volume en transmission est un réseau à strates inclinées par rapport au plan du support, mais non perpendiculaires à celui-ci, réalisé sur un support réfléchissant qui est selon un exemple un miroir diélectrique ou un miroir holographique à strates non inclinées. La déposante a montré que pour un faisceau incident sur la structure avec un angle θ d'environ 60,5° par rapport à la normale et un angle d'inclinaison des strates du réseau de volume en transmission par rapport à la normale au support d'environ 2°, on obtenait l'effet recherché.

Selon un second mode de réalisation de l'invention, illustré en figure 3, ledit réseau de volume en transmission est un réseau à strates perpendiculaires d'une part, et ledit support réfléchissant est un miroir holographique à strates inclinées, d'autre part. La déposante a montré que dans cet exemple, pour un faisceau incident sur la structure avec un angle θ d'environ 60,5° comme précédemment et un angle d'inclinaison des strates du réseau en réflexion formant le support réfléchissant par rapport à la normale au support d'environ 89°, on obtenait l'effet recherché.

On décrit maintenant plus en détails les exemples de réalisation des figures 2 et 3 qui représentent des composants comprenant des structures de réseau selon l'invention, adaptées à des moyens de compression ou d'étirement d'impulsions, par exemple pour un dispositif de génération d'impulsions ultra brèves de très forte énergie selon un montage de type Treacy. Les structures présentées ci-dessous sont adaptées pour des impulsions émises par un laser YAG : Néodyme (longueur d'onde centrale moyenne de l'ordre de 1,053 µm).

Les composants décrits fonctionnent pour une polarisation dite parallèle (ou transverse magnétique TM), telle que le champ électrique est dans le plan d'incidence défini par la normale au composant et le vecteur d'onde de l'onde incidente. L'angle d'incidence est proche de l'angle de Brewster, ce qui permet de réduire la réflexion à l'interface entre le milieu extérieur et la structure. Il est déterminé en fonction de l'application recherchée. Dans l'exemple des figures 2 et 3, un faisceau incident selon un angle θ d'environ 60,5° par rapport à la normale au support permet de répondre aux contraintes du montage de Treacy.

Le composant représenté figure 2 comprend un support 20 qui peut être en verre, par exemple de type BK7. Le support 20 est revêtu d'un miroir 21 formant le support réfléchissant. Le miroir 21 est par exemple un miroir multidiélectrique. Selon un mode de réalisation de l'invention, il peut être composé d'un empilement de paires de couches SiO₂ - HfO₂. Par exemple, la couche externe peut être une couche de SiO₂. Selon une variante, il peut s'agir également d'un réseau de volume en réflexion à strates non inclinées (miroir holographique), adapté à la longueur d'onde du faisceau incident.

Selon cet exemple, le miroir 21 est revêtu d'une couche tampon 22 résistante au flux laser, elle-même recouverte d'une couche épaisse (quelques dizaines de microns) d'un matériau holographique 23, qui constitue le réseau holographique de volume en transmission. La couche tampon 22 peut être constituée d'un matériau transparent tel que SiO₂ par exemple, de préférence déposé par un procédé sol-gel. Elle présente avantageusement un indice de réfraction voisin de celui du matériau holographique 23 et une épaisseur telle que, pour la longueur de l'impulsion laser considérée, le réseau holographique ainsi constitué n'est plus le siège d'interférences entre l'onde incidente et l'onde réfléchie. Le matériau holographique est par exemple de type gélatine bichromatée, photopolymère, ou matériau réalisé par un procédé sol-gel. Des essais de tenue au flux laser en régime femtoseconde ont en effet montré un bon comportement des matériaux holographiques précités (par exemple, 4 à 5 J/cm² pour la gélatine bichromatée et 2 J/cm² avec un photopolymère).

Dans l'exemple de la figure 2, le matériau 23 utilisé est par exemple un matériau photopolymère dans lequel sont inscrites des strates de pas A (quelques centaines de nanomètres) inclinées par rapport à la normale au support d'un angle φ sensiblement égal à 2°. Selon l'angle d'incidence a du faisceau laser par rapport à ces strates, le faisceau voit dans sa direction de propagation des strates écartées d'un pas Λ/cosα. Il existe un angle critique d'incidence du faisceau laser par rapport aux strates, pour lequel le faisceau laser voit des strates régulièrement réparties à un pas qui est égal à la longueur d'onde (ou multiple ou sous-multiple de la longueur d'onde). Pour cet angle critique α_{cr} le réseau est fortement diffractif et renvoie le faisceau à un angle qui dépend de la longueur d'onde. Dès qu'on s'écarte de cet angle, même de 1 ou 2°, le réseau n'est plus diffractif et il est traversé sans modification par le faisceau laser.

Une couche anti-reflet 24 peut être disposée à l'interface entre le milieu extérieur et ledit réseau holographique de volume en particulier lorsque le faisceau incident est en polarisation perpendiculaire, de manière à minimiser les pertes par réflexion.

On donne maintenant un exemple de valeurs numériques pour ce mode de réalisation. L'épaisseur du miroir 21 est approximativement égale à 10 microns, la couche tampon 22 a une épaisseur de 25 microns, la couche de matériau holographique 23 a une modulation d'indice de 0,04 et une épaisseur d'environ 30 microns. Les strates sont inclinées avec un angle φ d'environ 2° par rapport à la normale au support et le pas Λ des strates est d'environ 630 nm pour la longueur d'onde moyenne choisie (1,053 µm). Les indices des couches anti-reflet 24, tampon 22 et miroir 21 sont sensiblement les mêmes.

Selon le mode de réalisation présenté sur la figure 2, l'onde incidente subit successivement les effets suivants. Elle est transmise au travers de l'interface entre l'air et la couche antireflet 24. Les pertes par réflexion sont minimisées compte tenu de l'état de la polarisation et de l'angle d'incidence. Puis elle est transmise à travers la couche anti-reflet jusqu'à l'interface avec la couche holographique, puis à travers la couche holographique. L'angle d'incidence du faisceau par rapport aux strates du réseau de la couche holographique est suffisamment écarté de l'angle critique α_{cr} pour que la couche holographique reste transparente pour le faisceau. L'écart est dû à l'angle φ (angle d'inclinaison des strates du réseau) ; il est d'environ 2°. L'onde incidente traverse ensuite la couche tampon, est réfléchie sur le miroir diélectrique, retraverse la couche tampon vers le réseau holographique de la couche 23. Mais au retour, l'angle d'incidence sur les strates est différent. Il est très proche de l'angle critique, il y a donc diffraction avec une très forte efficacité par le réseau holographique, et modification de l'angle de sortie en fonction de la longueur d'onde. Les faisceaux émergents sont alors transmis au travers de l'interface couche holographique - air. Les pertes par réflexion sont minimisées compte tenu de l'état de polarisation et des angles autour de 60°.

Ainsi, pour un faisceau d'entrée incident à 60,5° , le faisceau de sortie ressort à une incidence de 51,9° pour la longueur d'onde moyenne de 1053 nm, l'incidence de sortie variant avec la longueur d'onde. On peut ainsi réaliser, par exemple, un réseau en transmission ayant des caractéristiques telles que sensiblement 100 % de l'onde incidente à 60,5° est transmise par ledit réseau, et sensiblement 100 % de l'onde précédemment transmise puis réfléchie par ledit support réfléchissant est diffractée par ledit réseau pour sortir en moyenne à 51,9°. Des réseaux de forte efficacité de diffraction et de grande dimension (diamètre sensiblement égal à 150 mm) ont ainsi été réalisés selon l'invention sur miroir diélectrique. Bien entendu, selon le principe de propagation inverse de la lumière, on peut également travailler avec un faisceau incident sur la structure avec un angle θ d'environ 52°. Celui-ci sera diffracté lors du premier passage à travers la couche holographique 23 selon un angle dépendant de la longueur d'onde. Les faisceaux ainsi diffractés seront réfléchis par le miroir 21, puis transmis sans diffraction par le réseau holographique 23 pour émerger de la structure avec un angle autour de 60°.

On présente maintenant, en relation avec la figure 3, un deuxième mode de réalisation d'une structure de réseau selon l'invention pour un laser YAG : Néodyme de longueur d'onde moyenne 1053 nm.

Le composant présenté en figure 3 comprend un support 30 recouvert d'un miroir holographique 31 à strates faiblement inclinées par rapport à la couche (φₘ=89° par rapport à la normale à la couche) et qui forme le support réfléchissant selon l'invention. Le miroir holographique présente dans cet exemple également un effet dispersif en longueur d'onde, mais qui est faible du fait de la faible inclinaison des strates par rapport au support. Une couche tampon 32, résistante au flux laser, et présentant des caractéristiques semblables à celles décrites dans le premier mode de réalisation, recouvre le miroir holographique 31. Un matériau holographique 33, du même type que celui décrit précédemment, est déposé sur la couche 32 de manière à constituer le réseau holographique de volume en transmission. Mais dans cet exemple, les strates sont sensiblement perpendiculaires à la couche (φ=0°). L'angle d'incidence est sensiblement égal à 60,5°, et l'angle diffracté est sensiblement égal à 51,9° pour la longueur d'onde moyenne de 1053 nm. Une couche anti-reflet 34 peut également être prévue.

Dans cet exemple, la dissymétrie lors du premier et du second passage, dans la direction de propagation du faisceau par rapport à la direction des strates du réseau en transmission 33 (angle d'incidence α), est obtenue grâce à l'inclinaison des strates du réseau holographique de volume en réflexion, formant le support réfléchissant 31. Les exemples présentés ne sont pas exhaustifs et cette dissymétrie, qui permet la diffraction par le réseau en transmission seulement lors d'un des passages, peut être obtenue par d'autres configurations de mise en oeuvre du réseau en transmission et du support réfléchissant. Parmi les avantages des exemples présentés sur les figures 2 et 3, on peut citer la mise en oeuvre d'une structure multicouches, de faible épaisseur, et présentant une très bonne résistance au flux, notamment car il n'est pas nécessaire d'interposer entre les couches formant l'hologramme en transmission et le support réfléchissant, de lames supplémentaires, par exemple en verre, qui risqueraient de ne pas tenir aux très fortes énergies.

Les composants décrits sur les figures 2 et 3 s'appliquent notamment à des moyens de compression ou d'étirement d'impulsions et à un dispositif de génération d'impulsions à très forte puissance crête comprenant de tels moyens de compression et/ou d'étirement.

D'autres applications peuvent être envisagées pour la structure de réseau selon l'invention, qui mettent à profit son fort pouvoir dispersif et sa très grande efficacité. Par exemple dans le domaine des télécommunications optiques.

La figure 4 décrit de façon schématique un montage classique dans les télécommunications optiques pour le multiplexage à division de longueur d'onde (ou WDM selon l'expression anglo-saxonne « Wavelengths Division Multiplexing »). Ce montage comprend une optique de collimation 41 et un élément diffractant 42. L'optique 41 forme d'un faisceau lumineux de longueur d'onde moyenne donnée issu d'une fibre optique 43 un faisceau parallèle F_{IN} sur l'élément diffractant 42, afin de séparer les composantes du faisceau (ou canaux) aux différentes longueurs d'onde. Sur le schéma de la figure 4, deux composantes aux longueurs d'onde λ et λ' sont représentées.

L'invention propose un dispositif de multiplexage mettant en oeuvre la structure de réseau par holographie de volume selon l'invention, qui constitue l'élément diffractant 42. Selon l'invention, il est formé d'un réseau de volume en transmission 421 réalisé sur un support en réflexion 422. Son très bon pouvoir dispersif permet en effet de résoudre des longueurs d'onde séparées de quelques fractions de nanomètres (0,2 à 0,5 nm), ce qui peut être très intéressant, notamment lorsqu'on cherche à travailler avec beaucoup de canaux. Le pas des strates du réseau de volume en transmission 421 est déterminé en fonction de la longueur d'onde moyenne centrale du faisceau incident (par exemple autour de 1,5 µm).

L'invention propose également un dispositif de filtrage réjecteur en longueur d'onde pour télécommunications optiques, qui permet de séparer une longueur d'onde donnée d'un paquet de longueurs d'onde. Selon l'invention, il comprend une structure de réseau par holographie de volume à forte dispersion telle qu'elle a été décrite précédemment. Les caractéristiques de la structure sont choisies de telle sorte à adapter la structure à la longueur d'onde à réjecter, permettant la diffraction lors d'un des passages dans le réseau en transmission de la composante du faisceau incident à ladite longueur d'onde. Les composantes aux autres longueurs d'onde sont réfléchies sans diffraction par la structure, et sont donc émergentes de la structure dans une direction différente de la composante qui a subi l'effet de diffraction, ce qui permet de les séparer.

## Revendications

1. Structure de réseau par holographie de volume à forte dispersion, **caractérisée en ce qu'**elle comprend un réseau holographique de volume en transmission (23, 33) réalisé sur un support réfléchissant (21; 31), ledit réseau étant constitué de strates inclinées par rapport au plan du support, l'angle d'inclinaison φ des strates défini par rapport à la normale au support et le pas des strates Λ étant choisis de telle sorte qu'un faisceau lumineux de longueur d'onde moyenne λ₀ donnée, incident sur ladite structure avec un angle d'incidence θ donné, subisse un premier passage à travers le réseau, soit réfléchi par le support réfléchissant, subisse un second passage à travers le réseau et ne soit diffracté par le réseau que lors d'un seul desdits passages.

2. Structure selon la revendication 1, **caractérisée en ce qu'**une couche anti-reflet (24, 34) est disposée à l'interface entre le milieu extérieur et ledit réseau holographique de volume.

3. Structure selon l'une des revendications 1 ou 2, **caractérisée en ce que** ledit réseau de volume en transmission est un réseau (23) à strates inclinées non perpendiculaires par rapport au plan du support, d'une part, et que ledit support réfléchissant (21) est un miroir holographique (21) à strates non inclinées par rapport au plan du support, d'autre part.

4. Structure selon l'une des revendications 1 ou 2, **caractérisée en ce que** ledit réseau de volume en transmission est un réseau (23) à strates inclinées non perpendiculaires par rapport au plan du support, d'une part, et que ledit support réfléchissant (21) est un miroir diélectrique (21), d'autre part.

5. Structure selon l'une des revendications 3 ou 4, **caractérisée en ce que** l'angle d'inclinaison φ des strates par rapport à la normale au support est d'environ 2°.

6. Structure selon l'une des revendications 1 ou 2, **caractérisée en ce que** ledit réseau de volume en transmission est un réseau (33) à strates perpendiculaires, d'une part, et que ledit support réfléchissant (31) est un miroir holographique (31) à strates inclinées par rapport au plan du support, d'autre part.

7. Structure selon la revendication 6, **caractérisée en ce que** l'angle φₘ d'inclinaison des strates du miroir holographique (31) par rapport à la normale au support est d'environ 89°.

8. Structure selon l'une des revendications précédentes, **caractérisée en ce que** ledit réseau de volume en transmission est constitué de matériaux holographiques, l'un au moins desdits matériaux appartenant au groupe comprenant :
- gélatine bichromatée
- photopolymère
- matériau sol-gel.

9. Structure selon l'une des revendications précédentes, **caractérisée en ce que** ledit support réfléchissant et ledit réseau holographique de volume sont séparés par une couche tampon (22, 32).

10. Moyens de compression ou d'étirement d'une impulsion laser, **caractérisés en ce qu'**ils mettent en oeuvre au moins une structure de réseau par holographie de volume à forte dispersion selon l'une des revendications précédentes.

11. Moyens de compression ou d'étirement d'une impulsion laser selon la revendication 10, **caractérisés en ce que** la longueur d'onde moyenne λ₀ de ladite impulsion valant sensiblement 1053 nm, l'angle d'incidence θ de l'impulsion sur ladite structure est sensiblement égal à 60°, le support réfléchissant (21) est formé d'un miroir diéléctrique ou d'un miroir holographique (21) à strates non inclinées, le pas des strates Λ dudit réseau holographique de volume en transmission est d'environ 630 nm et l'angle d'inclinaison φ par rapport à la normale au support d'environ 2°.

12. Moyens de compression ou d'étirement d'une impulsion laser selon la revendication 10, **caractérisés en ce que** la longueur d'onde moyenne λ₀ de ladite impulsion valant sensiblement 1053 nm, l'angle d'incidence θ de l'impulsion sur ladite structure est sensiblement égal à 60°, le réseau en transmission est à strates sensiblement perpendiculaires, dont le pas Λ est d'environ 630 nm et le support réfléchissant (31) est formé d'un miroir holographique (31) à strates inclinées, l'angle d'inclinaison φₘ des strates du miroir holographique par rapport à la normale au plan du support étant d'environ 89°.

13. Dispositif de génération d'impulsions laser à très forte puissance crête, **caractérisé en ce qu'**il comprend des moyens de compression et/ou d'étirement desdites impulsions selon l'une des revendications 10 à 12.

14. Dispositif de multiplexage à division de longueur d'onde pour télécommunications optiques, comprenant une optique de collimation (41) et un élément diffractant (42), ladite optique formant d'un faisceau lumineux de longueur d'onde moyenne donnée issu d'une fibre optique (43) un faisceau (F_{IN}) sensiblement parallèle sur ledit élément diffractant, **caractérisé en ce que** ledit élément diffractant est constitué de la structure de réseau par holographie de volume à forte dispersion selon l'une des revendications 1 à 9, adaptée à ladite longueur d'onde.

15. Dispositif de filtrage réjecteur en longueur d'onde pour télécommunications optiques, **caractérisé en ce qu'**il comprend une structure de réseau par holographie de volume à forte dispersion selon l'une des revendications 1 à 9, les caractéristiques de ladite structure étant choisies de telle sorte à permettre la diffraction lors d'un des passages dans le réseau en transmission de la composante à la longueur d'onde à réjecter, les composantes aux autres longueurs d'onde étant réfléchies sans diffraction par ladite structure.

## Claims

1. Grating structure by high dispersion volume holography, **characterized in that** it comprises a transmission volume holographic grating (23, 33) produced on a reflective support (21, 31), the said grating consisting of strata inclined to the plane of the support, the angle of inclination φ of the strata defined with respect to the normal to the support and the pitch of the strata A being chosen such that a light beam of given mean wavelength λo, incident on the said structure with a given angle of incidence θ, undergoes a first passage through the grating, is reflected by the reflective support, undergoes a second passage through the grating and is only diffracted by the grating during one of the said passages.

2. Structure according to claim 1, **characterized in that** an anti-reflection layer (24, 34) is deposited at the interface between the external medium and the said volume holographic grating.

3. Structure according to claim 1 or 2, **characterized in that** the said transmission volume grating is a grating (23) with inclined strata not perpendicular to the plane of the support, on the one hand, and wherein the said reflective support (21) is a holographic mirror (21) with strata not inclined with respect to the plane of the support, on the other hand.

4. Structure according to claim 1 or 2, **characterized in that** the said transmission volume grating is a grating (23) with inclined strata not perpendicular to the plane of the support, on the one hand, and wherein the said reflective support (21) is a dielectric mirror (21), on the other hand.

5. Structure according to claim 3 or 4, **characterized in that** the angle of inclination φ of the strata to the normal to the support is approximately 2°.

6. Structure according to claim 1 or 2, **characterized in that** the said transmission volume grating is a grating (23) with perpendicular strata, on the one hand, and wherein the said reflective support (31) is a holographic mirror (31) with strata inclined to the plane of the support, on the other hand.

7. Structure according to claim 6, **characterized in that** the angle of inclination φₘ of the strata of the holographic mirror (31) to the normal to the support is approximately 89°.

8. Structure according to one of the previous claims, **characterized in that** the said transmission volume grating consists of holographic materials, with at least one of the said materials belonging to the following group:
- dichromated gelatine
- photopolymer
- sol-gel material.

9. Structure according to one of the previous claims, **characterized in that** the said reflective support and the said volume holographic grating are separated by a buffer layer (22, 32).

10. Laser pulse compression or stretching means, **characterized in that** they implement at least a grating structure by high dispersion volume holography according to one of the previous claims.

11. Laser pulse compression or stretching means according to claim 10, **characterized in that** the mean wavelength λo of the said pulse is approximately 1053 nm, the angle of incidence θ of the pulse on the said structure is approximately 60°, the reflective support (21) consists of a dielectric mirror or a holographic mirror (21) with non-inclined strata, the pitch Λ of the strata of said transmission volume holographic grating is approximately 630 nm and the angle of inclination θ to the normal to the support is approximately 2°.

12. Laser pulse compression or stretching means according to claim 10, **characterized in that** the mean wavelength λ₀ of the said pulse is approximately 1053 nm, the angle of incidence θ of the pulse on the said structure is approximately 60°, the transmission grating has almost perpendicular strata with a pitch A of approximately 630 nm and the reflective support (31) consists of a holographic mirror with inclined strata, the angle of inclination φₘ of the holographic mirror strata to the normal to the plane of the support is approximately 89°.

13. Device to generate laser pulses of very high peak power, **characterized in that** it comprises means to compress and/or stretch the said pulses according to one of claims 10 to 12.

14. Wavelength division multiplexing device for optical telecommunications, comprising collimation optics (41) and a diffracting element (42), the said optics forming from a light beam of given wavelength output from an optical fibre (43) a beam (F_{IN}) roughly parallel to the said diffracting element, **characterized in that** the said diffracting element consists of the grating structure by high dispersion volume holography according to one of claims 1 to 9, adapted to the said wavelength.

15. Wave trap device for optical telecommunications, **characterized in that** it comprises a grating structure by high dispersion volume holography according to one of claims 1 to 9, the characteristics of the said structure being chosen so that the component at the wavelength to be trapped is diffracted during one of the passages in the transmission grating, the components at the other wavelengths are reflected without diffraction by the said structure.

## Patentansprüche

1. Holographische Volumengitterstruktur mit hoher Dispersion, **dadurch gekennzeichnet, dass** sie ein holographisches Transmissionsvolumengitter (23, 33) umfasst, realisiert auf einem reflektierenden Träger (21; 31), wobei das genannte Gitter durch bezüglich der Ebene des Trägers geneigte Schichten gebildet wird, der Neigungswinkel φ der Schichten, definiert in Bezug auf die Normale zum Träger, und die Teilung A der Schichten so gewählt sind, dass ein Lichtstrahl von gegebener mittlerer Wellenlänge λ₀, der in die genannte Struktur unter einem gegebenen Einfallwinkel θ einfällt, das Gitter ein erstes Mal durchquert, durch den reflektierenden Träger reflektiert wird, das Gitter ein zweites Mal durchquert und durch das Gitter nur bei einer der beiden Durchquerungen gebeugt wird.

2. Struktur nach Anspruch 1, **dadurch gekennzeichnet, dass** an der Grenzfläche zwischen dem Außenmedium und dem genannten holographischen Volumengitter eine Antireflexschicht (24, 34) vorgesehen ist.

3. Struktur nach einem der Ansprüche 1 oder 2, **dadurch gekennzeichnet, dass** das genannte Transmissionsvolumengitter einerseits ein Gitter (23) mit geneigten, bezüglich der Ebene des Trägers nicht-senkrechten Schichten ist, und dass andererseits der genannte reflektierende Träger (21) ein holographischer Spiegel (21) mit bezüglich der Ebene des Trägers nicht-geneigten Schichten ist.

4. Struktur nach einem der Ansprüche 1 oder 2, **dadurch gekennzeichnet, dass** das genannte Transmissionsvolumengitter einerseits ein Gitter (23) mit geneigten, bezüglich der Ebene des Trägers nicht-senkrechten Schichten ist, und dass andererseits der genannte reflektierende Träger (21) ein dielektrischer Spiegel (21) ist.

5. Struktur nach einem der Ansprüche 3 oder 4, **dadurch gekennzeichnet, dass** der Neigungswinkel φ der Schichten in Bezug auf die Normale zum Träger ungefähr 2° beträgt.

6. Struktur nach einem der Ansprüche 1 oder 2, **dadurch gekennzeichnet, dass** einerseits das Transmissionsvolumengitter ein Gitter (33) mit senkrechten Schichten ist, und dass andererseits der reflektierende Träger (31) ein holographischer Spiegel (31) mit bezüglich der Ebene des Trägers geneigten Flächen ist.

7. Struktur nach Anspruch 6, **dadurch gekennzeichnet, dass** der Neigungswinkel φₘ der Schichten des holographischen Spiegels (31) in Bezug auf die Normale zum Träger ungefähr 89° beträgt.

8. Struktur nach einem der vorangehenden Ansprüche, **dadurch gekennzeichnet, dass** das genannte Transmissionsvolumengitter durch holographische Materialien gebildet wird, wobei wenigstens eines der genannten Materialien zu der Gruppe gehört, die umfasst:
- bichromatische Gelatine
- Photopolymer
- Sol-Gel-Material.

9. Struktur nach einem der vorangehenden Ansprüche, **dadurch gekennzeichnet, dass** der genannte reflektierende Träger und das genannte holographische Volumengitter durch eine Pufferschicht (22, 32) getrennt sind.

10. Einrichtungen zum Verdichten oder Dehnen eines Laserimpulses, **dadurch gekennzeichnet, dass** sie wenigstens eine holographische Volumengitterstruktur mit hoher Dispersion nach einem der vorangehenden Ansprüche umfasst.

11. Einrichtungen zum Verdichten oder Dehnen eines Laserimpulses nach Anspruch 10, **dadurch gekennzeichnet, dass** die mittlere Wellenlänge λ₀ des genannten Impulses im Wesentlichen 1053 nm beträgt, der Einfallwinkel des Impulses in die genannte Struktur im Wesentlichen 60° beträgt, der reflektierende Träger (21) durch einen dielektrischen Spiegel oder einen holographischen Spiegel (21) mit nicht-geneigten Schichten gebildet wird, die Teilung der Schichten des genannten holographischen Transmissionsvolumengitters ungefähr 630 nm beträgt, und der Neigungswinkel φ in Bezug auf die Normale zum Träger ungefähr 2° beträgt.

12. Einrichtungen zum Verdichten oder Dehnen eines Laserimpulses nach Anspruch 10, **dadurch gekennzeichnet, dass** die mittlere Wellenlänge λ₀ des genannten Impulses im Wesentlichen 1053 nm beträgt, der Einfallwinkel des Impulses in die genannte Struktur im Wesentlichen 60° beträgt, das Transmissionsgitter im Wesentlichen senkrechte Schichten umfasst, deren Teilung ungefähr 630 nm beträgt und der reflektierende Träger (31) durch einen holographischen Spiegel (31) mit geneigten Schichten gebildet wird, wobei der Neigungswinkel φₘ der Schichten des holographischen Spiegels in Bezug auf die Normale zum Träger ungefähr 89° beträgt.

13. Vorrichtung zur Erzeugung von Laserimpulsen mit sehr hoher Spitzenleistung, **dadurch gekennzeichnet, dass** sie Einrichtungen zum Verdichten und/oder Dehnen der genannten Impulse nach einem der Ansprüche 10 bis 12 umfasst.

14. Wellenlängenteilungs-Multiplexvorrichtung für optische Telekommunikationen, eine Kollimationsoptik (41) und ein Beugungselement (42) umfassend, wobei die genannte Optik aus einem aus einer Faser (43) austretenden Lichtstrahl von gegebener mittlerer Wellenlänge einen für das genannte Beugungselement bestimmten, im Wesentlichen parallelen Strahl (F_{IN}) formt,
**dadurch gekennzeichnet, dass** das genannte Beugungselement durch
die holographische Volumengitterstruktur mit hoher Dispersion nach einem der Ansprüche 1 bis 9 gebildet wird, angepasst an die genannte Wellenlänge.

15. Wellenlängenunterdrückungs-Filtervorrichtung für optische Kommunikationen, **dadurch gekennzeichnet, dass** sie eine holographische Volumengitterstruktur mit hoher Dispersion nach einem der Ansprüche 1 bis 9 umfasst, wobei die Charakteristiken der genannten Struktur so gewählt werden, dass bei einer der Durchquerungen des Transmissionsgitters die Komponente mit der zu unterdrückenden Wellenlänge gebeugt wird und die Komponenten mit den anderen Wellenlängen durch die genannte Struktur ohne Beugung reflektiert werden.
